# EUROPEAN PATENT SPECIFICATION

(11) **EP 1 127 672 B1**
(45) Date of publication and mention of the grant of the patent: **27.08.2003**
(21) Application number: 00610023.4
(22) Date of filing: 23.02.2000
(51) Int. Cl.: B29C 45/14

(54) **A method of manufacturing a shell element provided with an undercut and a shell element manufactured by said method**
Verfahren zur Herstellung eines Schalenelementes mit einer Hinterschneidung und durch dieses Verfahren hergestelltes Schalenelement
Procédé de fabrication d'un élément de coque pourvu d'une contre-dépouille et élément de coque fabriqué par ce procédé

(43) Date of publication of application: 29.08.2001
(73) Proprietor: Telefonaktiebolaget L M Ericsson (Publ), 126 25 Stockholm (SE)
(72) Inventor: Nilsson, Gert, 275 38 Sjöbo (SE); Persson, Michael, 261 93 Landskrona (SE)
(74) Representative: Boesen, Johnny Peder

(56) References cited:
- EP-A- 0 510 414
- WO-A-81/00654
- PATENT ABSTRACTS OF JAPAN vol. 1995, no. 04, 31 May 1995 (1995-05-31) -& JP 07 007284 A (KOMATSU LTD), 10 January 1995 (1995-01-10)
- PATENT ABSTRACTS OF JAPAN vol. 10, no. 77 (M-464), 26 March 1986 (1986-03-26) -& JP 60 219021 A (TOYOTA JIDOSHA KK), 1 November 1985 (1985-11-01)

## Description

The invention relates to a method of manufacturing a shell element for an electronic device, said shell element having a front and at least one part that is angled in relation to said front, said shell element further comprising a formed sheet that constitutes at least a part of the outer surface of said front and at least a part of said part that is angled in relation to the front of the shell element, said method comprising the steps of:
- forming said sheet to a desired shape including a part that is angled in relation to a front part,
- injection moulding a plastics material on the back of the formed sheet.

WO 81/00654 discloses such a method.

The invention further relates to a shell element manufactured by this method.

The term electronic device includes portable radio communication equipment which includes all equipment such as mobile telephones, pagers, communicators, i.e. electronic organizers, smartphones or the like. Another example of an electronic device is a Personal Digital Assistant (PDA).

In order to produce electronic equipment such as mobile phones with varying outer appearances, a number of different techniques have been developed. One of these techniques is the one described above in which a sheet of e.g. PC (polycarbonate) is provided with a decoration in terms of a print. The sheet is then formed into a desired shape by first heating the sheet, e.g. in an infra-red oven, and then use any conventionally known technique to form the heated sheet, e.g. by high pressure forming, hydro forming or vacuum forming. The heated sheet may also be positioned in a press mould with mould parts that form the sheet into the desired shape.

When the sheet is cooled, it is removed from the press mould or male form part. In relation to the present invention, the formed sheet is provided with at least one part - preferably a circumferential flange - that is angled in relation to the front of the formed sheet.

Usually, the edges of the formed sheet are trimmed and openings for e.g. keys and a display are provided in the front of the formed sheet. The openings may be made by punching or cutting.

The formed sheet is then positioned in an injection mould in which one mould part has an inner shape that is complementary to the outer shape of the formed sheet and of the finished shell element. The mould part is provided with protrusions that extend into the openings of the formed sheet. The protrusions of the mould part abut the other mould part when the injection mould is closed.

A plastics material, such as PC or ABS, is injected into the closed injection mould onto the back of the formed sheet. Due to the above-mentioned protrusions the finished shell element is provided with openings corresponding to the openings in the formed sheet.

When the plastics material is cooled, the finished shell element is removed from the injection mould. The shell element needs no further trimming.

By using the above-described method, varying outer appearances of e.g. mobile phones may be accomplished by varying only the printed decoration on the sheet, i.e. the method of manufacturing remains unchanged. This technique has therefore been found to be economically beneficial if it is desired to vary the outer appearances of a shell element for electronic devices.

JP patent abstract No. 59-152,834 discloses a method of manufacturing a plastics injection moulded item with openings and an injection mould therefore. The injection mould is provided with stamping pins that punch the openings in a preformed and decorated sheet when the injection mould is closed. The plastics material is then injection moulded directly on the back of the preformed sheet to form a finished shell element.

According to the prior art, shell elements of the type described above are manufactured with openings in the front part and with an angled part, e.g. a circumferential flange, extending from the front of the shell. It is only known to manufacture shell elements of this type in which the angled part forms an obtuse angle with the front, i.e. the formed sheet is provided with an obtuse angle between the front and the angled part and this formed sheet is positioned in a female injection mould part having an inner shape that is complementary to the outer shape of the formed sheet.

If an electronic device comprising a shell element is to be provided with some kind of gripping means at the angled part, e.g. in form of recesses, these gripping means must be provided in the shell element after it has been ejected from the injection mould.

It is an object of the invention to provide a method of manufacturing a shell element of the above-mentioned type, said shell element being provided with means that at least partly constitute gripping means for the electronic device in which the shell element is applied.

This object is achieved by providing at least one area of the angled part of the formed sheet mentioned in the opening paragraph with an undercut at the latest during injection moulding of the plastics material on the back of the formed sheet.

Thereby the shell element is provided with means that at least partly constitute gripping means, said means being provided without need for any later trimming of the shell element.

The edges of the formed sheet are preferably trimmed and openings in the front part of the formed sheet, if any, are preferably provided before the plastics material is injection moulded on the back of the formed sheet. Thereby no further trimming of the finished shell element after injection moulding is necessary.

Preferably the undercut is provided during forming of the sheet to the desired shape, i.e. only one process is applied for forming the sheet. Furthermore, the formed sheet provided with at least one undercut in the angled part can be more safely retained in the injection mould than the known formed sheets, since the injection mould has an inner shape that is complementary to the outer shape of the formed sheet, i.e. with protrusions that engage the undercut areas of the formed sheet.

The injection mould may be provided with at least one protrusion that extends into at least one area provided with an undercut when the formed sheet is positioned in the injection mould for injection moulding a plastics material on the back of the formed sheet, or it may be provided with at least one displaceable member that is displaced into at least one area provided with an undercut when the formed sheet is positioned in the injection mould.

If the injection mould is provided with protrusions, the injection mould can be made relatively simple. This structure requires, however, that the formed sheet as well as the finished shell element is sufficiently flexible in order to flex into and out of the injection mould part that has these protrusions. A more complex structure of the injection mould is achieved if it is provided with displaceable members. However, if the material used is relatively unflexible, this may be a preferred injection mould structure since the formed sheet can be positioned directly in the injection mould without flexing, and the finished shell element can be removed from the injection mould without flexing.

In an alternative method according to the invention the undercut is provided in the formed sheet by means of protrusions provided in the injection mould and under influence of an injection moulding pressure when the plastics material is injected into the injection mould. In this method the undercut is provided during the injection moulding process, i.e. forming of the formed sheet with an undercut is avoided.

The formed sheet may preferably cover the entire front of the shell element while the angled part comprises a circumferential flange that extends from the front of the shell element. Thereby the outlook of the shell element is determined solely by the appearance of the formed sheet. The plastics material that is injection moulded onto the back of the formed sheet can therefore be of any kind that fulfils the physical requirements to the material regardless of colour and appearance.

In a preferred embodiment the sheet is a plastics material, such as polycarbonate (PC), and the material that is injection moulded on the back of the formed sheet is also a plastics material, such as PC or ABS. Such plastics materials can be easily formed to the desired shape and are very suitable for injection moulding and calls for good chemical bonding between the formed sheet and the backing.

The electronic device, which the shell element is intended for, is preferably a mobile radio station, such as a mobile telephone.

It shall be emphasised that the term "comprise/comprising" when used in this specification is taken to specify the presence of stated features, integers, steps or components but does not preclude the presence or addition of one or more other features, integers, steps components or groups thereof.

The invention will be described in detail in the following with reference to the drawings in which
Fig. 1 stepwise shows the manufacturing of a shell element according to the invention,
Figs. 2a and 2b each shows a cross-section of an injection mould in a first embodiment for use in the method of manufacturing according to the invention, and
Fig. 3 shows a cross-section of an injection mould in a second embodiment for use in the method of manufacturing according to the invention.

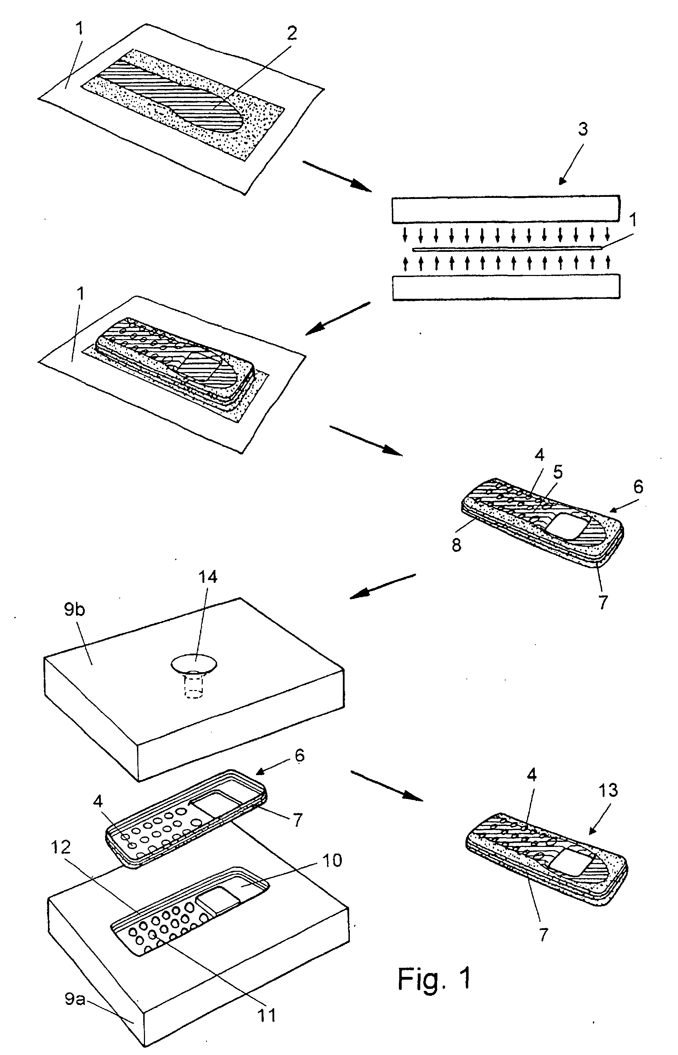

Fig. 1 shows the manufacturing process for a shell element having undercuts in side parts that are angled in relation to the front of the shell element.

The starting material is a sheet 1 of a plastics material, such as polycarbonate (PC). The sheet 1 is provided with a print 2 which may comprise more than one colour or pattern as shown. The print may be provided at one or either side of the sheet 1 or it may be provided between two layers of a laminated sheet 1.

The sheet 1 is heated, e.g. in an infra-red oven 3 as schematically illustrated, and is then formed into a desired shape by any known process, such as high pressure forming, vacuum forming, hydro forming or in a press tool. These forming processes are well-known in the art and are not shown in details. The preferred process is the high pressure forming process in which the sheet is positioned over a male form having undercuts and pressurized air is applied to the outer side of the heated sheet.

After forming, the formed sheet 6 is provided with a circumferential flange 8 that is angled in relation to the front 5 of the formed sheet 6. The angulation may in a preferred embodiment be about 90° as shown, i.e. the flange 8 extends in a substantially right angle in relation to the front 5 of the formed sheet 6. The angled part, i.e. the flange 8, is provided with undercuts 7 at its two long sides. After forming the formed sheet 6, the edge of the sheet 1 is trimmed by cutting, and openings 4 are punched or cut in the front 5.

At this point in the manufacturing process the formed and trimmed sheet 6 has achieved the desired shape and no further trimming is needed.

The formed sheet 6 is positioned in a lower mould part 9a of an injection mould. This lower mould part 9a is provided with a recess 10 having a shape that is complementary to the outer shape of the formed sheet 6, i.e. the formed sheet 6 fits snugly into the recess 10. The recess 10 is provided with raised portions 11 that fit into the openings 4 provided in the formed sheet 6. The raised portions 11, 12 are abutted by the upper mould part 9b when the mould is closed, thereby forming cores for moulding openings in the finished shell element 13.

The recess 10 is further provided with protrusions 12 that fit snugly into the undercuts 7 of the formed sheet 6 when it is positioned in the lower injection mould part 9a.

The upper mould part 9b is provided with a sprue cup 14 through which the plastics material, such as PC or ABS, is injected after the injection mould has been closed. The injected plastics material spreads throughout the injection mould, forming a backing for the formed sheet 6 by adhering to the back of it and creating openings defined by the raised portions 11 of the injection mould.

When cooled, the finished shell element 13 is ejected from the injection mould and is ready to be furnished with components extending through the openings 4, i.e. no further trimming is necessary.

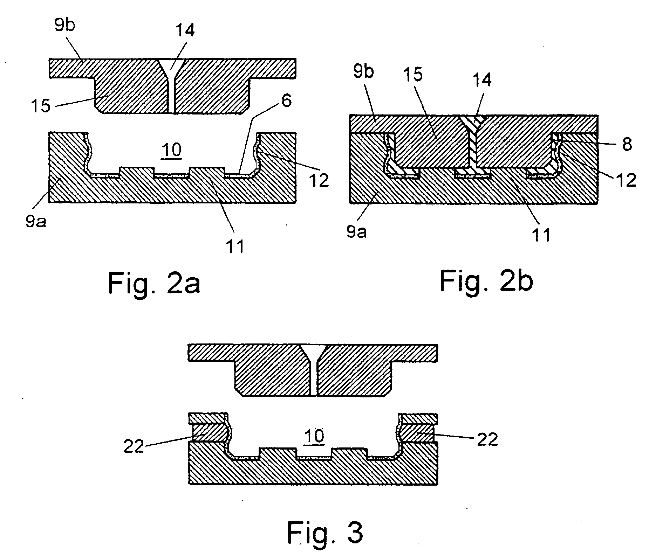

Figs. 2a and 2b show schematically a cross-section through an opened and a closed injection mould corresponding to the injection mould disclosed in Fig. 1.

The injection mould comprises a lower injection mould part 9a and an upper injection mould part 9b. The lower injection mould part 9a is provided with raised portions 11 and protrusions 12 that protrude from the inner sidewall into the recess 10. A formed sheet 6 is positioned in the recess 10, ready for injection moulding of a plastics material on the back of it. The formed sheet 6 is relatively thin and flexible and it can usually be pressed readily into the shown position having the raised portions 11 extending through the openings 4 of the formed sheet 6 and the protrusions 12 engaging the undercuts 7.

Since the raised portions 11 and the protrusions 12 extend in different directions, the formed sheet 6 is securely retained in the recess 10 when it is positioned as shown. Thus, provision of undercuts in the angled part or flange 8 and of openings 4 in the front 5 of the formed sheet 6 calls for good retaining of the formed sheet 6 in the injection mould recess 10 which has a complementary shape.

After the formed sheet 6 is positioned in the recess 10, the injection mould is closed as shown in Fig. 2b. The upper injection mould part 9b is provided with a male part 15 that fits into the recess 10, abutting on the raised portions 11. When a plastics material is injected through the sprue cup 14, it spreads throughout the injection mould, adhering to the back of the formed sheet 6 and creating openings defined by the raised portions 11 abutting the male part 15.

When the plastics material is cooled, the injection mould is opened and the finished shell element 13 is ejected. In order to eject the finished shell element 13, the flange 8 is pressed inwards to release the opening 7 from the raised portion 12.

Fig. 3 shows a cross-section of an injection mould in a second embodiment for use in the method of manufacturing according to the invention.

This injection mould corresponds to the injection mould shown in Figs. 2a and 2b except that the protrusions 12 have been replaced by displaceable members 22 that can be brought into engagement with the undercuts 7 of the formed sheet 6. This means that, when the members 22 are retracted, the finished shell element 13 can be ejected from the injection mould without deforming the flange 8, which is otherwise the case when the protrusions 12 are fixed as shown in Figs. 2a and 2b. An injection mould having displaceable members 22 may also advantageously be applied if the formed sheet 6 is made of a relatively unflexible material that cannot be deformed so as to snap over any fixed protrusions like the protrusions 12 shown in Figs. 2a and 2b.

A preferred embodiment for a method of manufacturing a shell element according to the invention has been described above with reference to the drawings. In an alternative method of manufacturing a shell element according to the invention, the formed sheet 6 is not initially provided with undercuts 7. In this alternative method, the undercuts are provided during the injection moulding process, i.e. the formed sheet is provided with a smooth flange 8 when it is positioned in the injection mould part 9a that is provided with protrusions 12, 22. When the plastics material is injected into the closed injection mould, the injection moulding pressure forces the formed sheet against the outer wall of the injection mould to form around the protrusions, thereby forming the undercuts 7 in the finished shell element.

It should also be realized, that the shell element may have other forms than the one shown. For instance, the formed sheet could constitute only a part of the surface of the front of the shell element, whereas the injection moulded plastics material constitutes a backing for the formed sheet as well as a part of the outer surface of the front of the shell element. According to the invention, however, at least a part of the formed sheet is angled in relation to the front of the shell element, said angled part being provided with at least one undercut.

## Claims

1. A method of manufacturing a shell element (13) for an electronic device, said shell element (13) having a front (5) and at least one part that is angled in relation to said front (5), said shell element (13) further comprising a formed sheet (6) that constitutes at least a part of the outer surface of said front (5) and at least a part of said part that is angled in relation to the front of the shell element (13), said method comprising the steps of:
- forming a sheet (6) to a desired shape including a part that is angled in relation to a front part,
- injection moulding a plastics material on the back of the formed sheet (6),
**characterised in**
- providing at least one area of the angled part of the formed sheet (6) with an undercut (7) at the latest during injection moulding of the plastics material on the back of the formed sheet (6).

2. A method according to claim 1, **characterised in** trimming the edges of the formed sheet (6) before the plastics material is injection moulded on the back of the formed sheet (6).

3. A method according to claims 1 or 2, **characterised in** providing at least one opening (4) in the front part of the formed sheet (6) before the plastics material is injection moulded on the back of the formed sheet (6).

4. A method according to any one of claims 1-3, **characterised in that** the undercut (7) is provided during forming of the sheet (1) to the desired shape.

5. A method according to claim 4, **characterised in that** the injection mould (9a, 9b) is provided with at least one protrusion (12) that extends into the at least one area provided with an undercut (7) when the formed sheet (6) is positioned in the injection mould (9a, 9b) for injection moulding a plastics material on the back of the formed sheet (6).

6. A method according to claims 4 or 5, **characterised in that** the injection mould (9a, 9b) is provided with at least one displaceable member (22) that is displaced into the at least one area provided with an undercut (7) when the formed sheet (6) is positioned in the injection mould (9a, 9b) for injection moulding a plastics material on the back of the formed sheet (6).

7. A method according to any one of claims 1-3, **characterised in that** the undercut (7) is provided in the formed sheet (6) by means of protrusions (12, 22) provided in the injection mould and under influence of an injection moulding pressure when the plastics material is injected into the injection mould (9a, 9b).

8. A method according to any one of claims 1-7, **characterised in that** the formed sheet (6) covers the entire front (5) of the shell element (13) and that the angled part comprises a circumferential flange (8) that extends from the front (5) of the shell element (13).

9. A method according to any one of claims 1-8, **characterised in that** the sheet (1) is a plastics material, such as polycarbonate (PC).

10. A method according to any one of claims 1-9, **characterised in that** the material that is injection moulded on the back of the formed sheet (6) is a plastics material, such as PC or ABS.

11. A method according to any one of claims 1-10, **characterised in that** the electronic device is a mobile radio station, such as a mobile telephone.

12. A shell element (13) for an electronic device, said shell element (13) having a front (5) and at least one part that is angled in relation to said front (5), said shell element (13) comprising
- a formed sheet (6) that constitutes at least a part of an outer surface of said front (5) and at least a part of said part that is angled in relation to the front (5) of the shell element (13),
- a backing that is injection moulded on the back of the formed sheet (6),
**characterised in that** at least one undercut (7) is provided in the part of the shell element (13) that is angled in relation to the front (5) of the shell element (13).

13. A shell element according to claim 12, **characterised in that** the formed sheet (6) covers the entire front (5) of the shell element (13) and that the angled part comprises a circumferential flange (8) that extends from the front (5) of the shell element (13).

14. A shell element according to claims 12 or 13, **characterised in that** at least one opening (4) is provided in the front (5) of the shell element (13).

15. A shell element according to any one of claims 12-14, **characterised in that** the sheet (1) is a plastics material, such as polycarbonate (PC).

16. A shell element according to any one of claims 12-15, **characterised in that** the material that is injection moulded on the back of the formed sheet (6) is a plastics material, such as PC or ABS.

17. A shell element according to any one of claims 12-16, **characterised in that** the electronic device is a mobile radio station, such as a mobile telephone.

## Patentansprüche

1. Verfahren zur Herstellung eines Schalenelementes (13) für ein elektronisches Gerät, wobei das besagte Schalenelement (13) eine Vorderseite (5) und mindestens einen Teil aufweist, der in Bezug auf die besagte Vorderseite (5) in einem Winkel steht, wobei das besagte Schalenelement (13) weiterhin ein geformtes Blatt (6) umfasst, die mindestens einen Teil der äusseren Oberfläche der besagten Vorderseite (5) und mindestens einen Teil des besagten Teiles bildet, der in Bezug auf die Vorderseite des Schalenelementes (13) in einem Winkel steht, wobei das besagte Verfahren die Schritte umfasst:
- Ausformen eines Blattes (6) in eine gewünschte Form, umfassend einen Teil, der in Bezug auf eine Vorderseite in einem Winkel steht,
- Spritzgiessen von Kunststoffmaterial auf die Rückseite des ausgeformten Blattes (6),
**dadurch gekennzeichnet, dass**
- mindestens ein Teil des gewinkelten Teiles des ausgeformten Blattes (6) spätestens während des Spritzgiessens des Kunststoffmaterials auf die Rückseite des ausgeformten Blattes (6) mit einer Hinterschneidung (7) versehen wird.

2. Verfahren nach Anspruch 1, **dadurch gekennzeichnet, dass** die Kanten des ausgeformten Blattes (6) getrimmt werden, bevor das Kunststoffmaterial auf die Rückseite des ausgeformten Blattes (6) im Spritzguss aufgebracht wird.

3. Verfahren nach Anspruch 1 oder 2, **dadurch gekennzeichnet, dass** mindestens eine Öffnung (4) in der Vorderseite des ausgeformten Blattes (6) vorgesehen ist, bevor das Kunststoffmaterial auf die Rückseite des ausgeformten Blattes (6) im Spritzguss aufgebracht wird.

4. Verfahren nach einem der Ansprüche 1 bis 3, **dadurch gekennzeichnet, dass** die Hinterschneidung (7) während des Ausformens des Blattes (1) in die gewünschte Form geschaffen wird.

5. Verfahren nach Anspruch 4, **dadurch gekennzeichnet, dass** die Spritzgussform (9a, 9b) mit mindestens einem Ansatz (12) versehen ist, der sich in mindestens einen Bereich erstreckt, der mit einer Hinterschneidung (7) versehen ist, wenn das ausgeformte Blatt (6) in der Spritzgussform (9a, 9b) positioniert ist, um ein Kunststoffmaterial auf der Rückseite des ausgeformten Blattes (6) im Spritzguss aufzubringen.

6. Verfahren nach Anspruch 4 oder 5, **dadurch gekennzeichnet, dass** die Spritzgussform (9a, 9b) mit mindestens einem verschiebbaren Element (22) versehen ist, welches mindestens zum Teil in einen Bereich verschoben wird, der mit einer Hinterschneidung (7) versehen ist, wenn das ausgeformte Blatt (6) in der Spritzgussform (9a, 9b) für den Spritzguss von Kunststoffmaterial auf die Rückseite des ausgeformten Blattes (6) positioniert wird.

7. Verfahren nach einem der Ansprüche 1 bis 3, **dadurch gekennzeichnet, dass** die Hinterschneidung (7) in dem ausgeformten Blatt (6) durch das Mittel von Ansätzen (12, 22), die in der Spritzgussform vorgesehen sind, und unter Einfluss eines Spritzgussdruckes vorgesehen wird, wenn das Kunststoffmaterial in die Spritzgussform (9a, 9b) eingespritzt wird.

8. Verfahren nach einem der Ansprüche 1 bis 7, **dadurch gekennzeichnet, dass** das ausgeformte Blatt (6) die gesamte Vorderseite (5) des Schalenelementes (13) abdeckt und dass der in einem Winkel stehende Teil einen Umkreisflansch (8) umfasst, der sich von der Vorderseite (5) des Schalenelementes (13) aus weg erstreckt.

9. Verfahren nach einem der Ansprüche 1 bis 8, **dadurch gekennzeichnet, dass** das Blatt (1) Kunststoffmaterial wie beispielsweise Polycarbonat (PC) ist.

10. Verfahren nach einem der Ansprüche 1 bis 9, **dadurch gekennzeichnet, dass** das Material, welches auf die Rückseite des ausgeformten Blattes (6) im Spritzguss aufgebracht wird, ein Kunststoffmaterial wie PC oder ABS ist.

11. Verfahren nach einem der Ansprüche 1 bis 10, **dadurch gekennzeichnet, dass** das elektronische Gerät eine mobile Funkstation wie ein mobiles Telefon ist.

12. Schalenelement (13) für eine elektronische Vorrichtung, wobei das besagte Schalenelement (13) eine Vorderseite (5) und mindestens einen Teil aufweist, der in Bezug auf die besagte Vorderseite (5) in einem Winkel steht, wobei das besagte Schalenelement (13) umfasst:
- ein ausgeformtes Blatt (6), welches mindestens einen Teil einer äusseren Oberfläche der besagten Vorderseite (5) und mindestens einen Teil des besagten Teils bildet, der in einem Winkel in Bezug auf die Vorderseite (5) des Schalenelementes (13) steht,
- eine Rückseite, die im Spritzguss auf die Rückseite des ausgeformten Blattes (6) im Spritzguss aufgetragen ist,
**dadurch gekennzeichnet, dass** mindestens eine Hinterschneidung (7) in dem Teil des Schalenelementes (13) vorgesehen ist, welcher in einem Winkel in Bezug auf die Vorderseite (5) des Schalenelementes (13) steht.

13. Schalenelement nach Anspruch 12, **dadurch gekennzeichnet, dass** das ausgeformte Blatt (6) die gesamte Vorderseite (5) des Schalenelementes (13) abdeckt und dass der im Winkel stehende Teil einen umkreisförmigen Flansch (8) umfasst, der sich von der Vorderseite (5) des Schalenelementes (13) weg erstreckt.

14. Schalenelement nach Anspruch 12 oder 13, **dadurch gekennzeichnet, dass** mindestens eine Öffnung (4) in der Vorderseite (5) des Schalenelementes (13) vorgesehen ist.

15. Schalenelement nach einem der Ansprüche 12 bis 14, **dadurch gekennzeichnet, dass** das Blatt (1) ein Kunststoffmaterial wie Polycarbonat (PC) ist.

16. Schalenelement nach einem der Ansprüche 12 bis 15, **dadurch gekennzeichnet, dass** das Material, welches auf die Rückseite des ausgeformten Blattes (6) im Spritzguss aufgebracht wird, ein Kunststoffmaterial wie PC oder ABS ist.

17. Schalenelement nach einem der Ansprüche 12 bis 16, **dadurch gekennzeichnet, dass** das elektronische Gerät eine mobile Funkstation wie ein mobiles Telefon ist.

## Revendications

1. Procédé de fabrication d'un élément de coque (13) pour un appareil électronique, où ledit élément de coque (13) comprend une partie avant (5) et au moins une partie, qui forme un angle par rapport à ladite partie avant (5), où ledit élément de coque (13) comprend aussi une feuille façonnée (6), qui constitue au moins une partie de la surface extérieure de ladite partie avant (5), et au moins une partie de ladite partie, laquelle comprend un angle par rapport à la partie avant de l'élément de coque (13), où ledit procédé comprend les pas:
- façonner une feuille (6) dans une forme souhaitée, comprenant une partie, qui forme un angle par rapport à la partie avant,
- mouler par injection de la matière plastique sur la face arrière de la feuille façonnée (6),
**caractérisé en ce que**
- au moins une partie de la partie coudée de la feuille façonnée (6) reçoit une contre-dépouille (7) au plus tard lors du moulage par injection de la matière plastique sur la face arrière de la feuille façonnée (6).

2. Procédé suivant la revendication 1, **caractérisé en ce que** les arêtes de la feuille façonnée (6) sont écourtées avant que la matière plastique soit moulée par injection sur la face arrière de la feuille façonnée (6).

3. Procédé suivant la revendication 1 ou 2, **caractérisé en ce qu'**une ouverture (4) au moins est prévue dans la partie avant de la feuille façonnée (6) avant que la matière plastique soit moulée par injection sur la face arrière de la feuille façonnée (6).

4. Procédé suivant une des revendications 1 à 3, **caractérisé en ce que** la contre-dépouille (7) est prévue lors du façonnage de la feuille (1) dans la forme souhaitée.

5. Procédé suivant la revendication 4, **caractérisé en ce que** la forme de moulage par injection (9a, 9b) est prévue avec au moins une saillie (12), qui s'étend dans au moins une zone, qui est prévue avec une contre-dépouille (7), quand la feuille façonnée (6) est positionnée dans la forme de moulage par injection (9a, 9b) pour mouler par injection une matière plastique sur la face arrière de la feuille façonnée (6).

6. Procédé suivant la revendication 4 ou 5, **caractérisé en ce que** la forme de moulage par injection (9a, 9b) est prévue avec au moins un élément (22) pouvant être déplacé, lequel peut au moins en partie être déplacé dans une zone, qui est prévue avec une contre-dépouille (7), si la feuille façonnée (6) est positionnée dans la forme de moulage par injection (9a, 9b) pour le moulage par injection de matière plastique sur la face arrière de la feuille façonnée (6).

7. Procédé suivant une des revendications 1 à 3, **caractérisé en ce que** la contre-dépouille (7) est prévue dans la feuille façonnée (6) par le moyen de saillies (12, 22), qui sont prévues dans la forme de moulage par injection, et par l'influence de la pression du moulage par injection, quand la matière plastique est injectée dans la forme de moulage par injection (9a, 9b).

8. Procédé suivant une des revendications 1 à 7, **caractérisé en ce que** la feuille façonnée (6) couvre la partie avant (5) complète de l'élément de coque (13) et **en ce que** la partie prévue dans un angle comprend une collerette circonférentielle (8) s'étendant de la partie avant (5) de l'élément de coque (13).

9. Procédé suivant une des revendications 1 à 8, **caractérisé en ce que** la feuille (1) est en matière plastique telle que le polycarbonate (PC).

10. Procédé suivant une des revendications 1 à 9, **caractérisé en ce que** le matériel, qui est moulé par injection sur la face arrière de la feuille façonnée (6), est en matière plastique telle que le PC ou l'ABS (styrène-acrylo-nitrile-butadiène).

11. Procédé suivant une des revendications 1 à 10, **caractérisé en ce que** l'appareil électronique est une station de radio mobile tel qu'un téléphone mobile.

12. Elément de coque (13) pour un appareil électronique, où ledit élément de coque (13) comprend une partie avant (5) et au moins une partie, qui forme un angle par rapport à ladite partie avant (5), où ledit élément de coque (13) comprend:
- une feuille façonnée (6), laquelle forme au moins une partie d'une surface extérieure de ladite partie avant (5) et au moins une partie de ladite partie, qui est dans un angle par rapport à la partie avant (5) de l'élément de coque (13),
- une face arrière, qui est moulée par injection sur la face arrière de la feuille façonnée (6),
**caractérisé en ce qu'**au moins une contre-dépouille (7) est prévue dans la partie de l'élément de coque (13), laquelle forme un angle par rapport à la partie avant (5) de l'élément de coque (13).

13. Elément de coque suivant la revendication 12, **caractérisé en ce que** la feuille façonnée (6) couvre la partie avant (5) complète de l'élément de coque (13) et **en ce que** la partie coudée comprend une collerette circonférentielle (8) s'étendant de la partie avant (5) de l'élément de coque (13).

14. Elément de coque suivant la revendication 12 ou 13, **caractérisé en ce qu'**une ouverture (4) au moins est prévue dans la partie avant (5) de l'élément de coque (13).

15. Elément de coque suivant une des revendications 12 à 14, **caractérisé en ce que** la feuille (1) est en matière plastique telle que le polycarbonate (PC).

16. Elément de coque suivant une des revendications 12 à 15, **caractérisé en ce que** le matériel, qui est moulé par injection sur la face arrière de la feuille façonnée (6), est en matière plastique telle que le PC ou l'ABS (styrène-acrylo-nitrile-butadiène).

17. Elément de coque suivant une des revendications 12 à 16, **caractérisé en ce que** l'appareil électronique est une station de radio mobile tel qu'un téléphone mobile.
